# EUROPEAN PATENT APPLICATION

(11) **EP 3 173 447 A1**
(43) Date of publication of application: **31.05.2017**
(21) Application number: 16200021.0
(22) Date of filing: 22.11.2016
(51) Int. Cl.: C09D 11/101

(54) **UV CURABLE GELLING INK FORMULATION WITH LOW WAX MIGRATION IN CURED STATE**

(30) Priority: 27.11.2015 EP 15196808
(71) Applicant: OCE-Technologies B.V., 5914 CA Venlo (NL)
(72) Inventor: BISSCHOP, Jacobus J.M., 5914 CA Venlo (NL); OGRINC, Hendrik J.A., 5914 CA Venlo (NL)
(74) Representative: OCE IP Department

(57) **Abstract**

The present invention relates to an ink composition comprising at least one network forming substance, an initiator, an amine acrylate and at least one selected oxygen scavenger, as well as a printing method wherein the present ink composition is printed on a recording medium, and a method of preparing the ink composition. Using the present ink composition, blooming during printing can be decreased or even prevented, particularly in UV curable gelling inks.

## Description

### FIELD OF THE INVENTION

The present invention relates to an ink composition comprising at least one network forming substance, an initiator, a gellant, an amine acrylate and at least one selected oxygen scavenger, as well as a printing method wherein the present ink composition is printed on a recording medium, and a method of preparing the present ink composition.

### STATE OF THE ART

For improving printing quality, wax is added to introduce a gelling aspect to UV ink: at jetting temperature, e.g. 70 °C, the wax is molten and dissolved in the ink. When a droplet of ink is jetted onto a media, the ink droplet will cool down, and as a result, the wax will crystallize and thus form a kind of loosely bonded interpenetrating network throughout the ink. In this network the ink is immobilized ("caged"), preventing it to spread any further.

In a next stage the gelled ink is cured, e.g. by UV radiation, using for example a mercury lamp or LED etc. During curing the monomers can be polymerized and a polymer network can be formed.

However, a problem of ink compositions comprising a wax is that even after curing the wax may migrate to the surface of the ink layer, thereby reducing the gloss of the image. This phenomenon is called blooming.

In general, wax blooming from cured UV gelling ink layers can be prevented by using non-migrating waxes, or by curing in oxygen free atmosphere. However, non-migrating waxes are rather expensive and not commercially available and cannot be easily set for the right melting point, particularly in gelling ink compositions, making development very complicated and the ink composition expensive, while an oxygen free (or almost oxygen free) atmosphere requires use of additional resources, e.g. N₂ or CO₂ blanketing prior to curing, and/or means for oxygen removal, making the printing process more complex and difficult to carry out in smaller scale.

US 8,262,210 B2 discloses radiation curable gel inks that comprise a curable gellant and a curable solid, and their use in forming images, such as through ink-jet printing.

In US 8,916,084 B2, a method for fabricating a three-dimensional object including depositing a first amount of an ultraviolet curable phase change ink upon a print region surface, successively depositing additional amounts of the ultraviolet curable phase change ink composition to create a three-dimensional object, and curing the ultraviolet curable phase change ink composition is described.

Furthermore, US 2009/163615 provides a latent ink-jet ink formulation suitable as solder mask, generally comprising at least one compound capable of self-crosslinking, at least one phenolic resin, at least one solvent, at least one mineral filler, at least one polyol, and at least one photo initiator.

However, the effect of the ink composition on blooming has not been discussed. There thus remains a problem of effectively preventing blooming in inks, particularly in UV curable gelling inks, respectively ink formulations.

### SUMMARY OF THE INVENTION

The inventors have found that a combination of substances forming a network in the ink, together with oxygen scavengers and an amine acrylate reduces or even prevents migration of molecules to the surface of the ink, particularly waxes in UV curable gelling inks.

According to a first aspect, the present invention relates to an ink composition, wherein the ink composition comprises at least one network forming substance, an initiator, an amine acrylate and at least one oxygen scavenger selected from the group of a thiol compound having 1 to 8 carbon atoms and an amine compound, wherein the amine compound is a compound according to Formula I or Formula II,

NR₁R₂R₃ Formula I

(NR₁R₂R₄O)ₘM Formula II

wherein R₁, R₂ and R₃ are selected from a linear or branched C₁-C₈ alkyl group and a (CH₂)ₙOH group wherein n is an integer from 1-8, R₄ is selected from a (CH₂)ₒ group, wherein o is an integer from 1-8, m is an integer from 1-4, m is an integer from 1-4, and M is a transition metal, and wherein the ink composition further comprises a gellant, preferably at least one wax, particularly a wax with a melting point of 45°C or higher.

Furthermore, a printing method comprising printing the ink composition of the invention on a recording medium is disclosed.

In addition, the present invention relates to a method of preparing an ink composition, comprising mixing at least one network forming substance, an initiator, an amine acrylate and at least one oxygen scavenger selected from the group of a thiol compound having 1 to 8 carbon atoms and an amine compound, wherein the amine compound is a compound according to Formula I or Formula II,

NR₁R₂R₃ Formula I

(NR₁R₂R₄O)ₘM Formula II

wherein R₁, R₂ and R₃ are selected from a linear or branched C₁-C₈ alkyl group and a (CH₂)ₙOH group wherein n is an integer from 1-8, R₄ is selected from a (CH₂)ₒ group, wherein o is an integer from 1-8, m is an integer from 1-4, and M is a transition metal, and wherein the ink composition further comprises a gellant, preferably at least one wax, particularly a wax with a melting point of 45°C or higher.

Further aspects and embodiments of the invention are disclosed in the dependent claims and can be taken from the following description, figures and examples, without being limited thereto.

### BRIEF DESCRIPTION OF THE DRAWINGS

The present invention will become more fully understood from the detailed description given herein below and accompanying schematic drawings which are given by way of illustration only and are not limitative of the invention, and wherein:
Fig. 1A shows a schematic representation of an inkjet printing system.
Fig. 1B shows a schematic representation of an inkjet print head.
Fig. 2 shows the results obtained in the Comparative Example and Example 1.

### DETAILED DESCRIPTION OF THE INVENTION

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually and appropriately detailed structure. In particular, features presented and described in separate dependent claims may be applied in combination, and any combination of such claims is herewith disclosed.

Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language).

In the present specification, amounts of a substance are usually given as weight/mass percent (wt%, m%), unless noted otherwise or clear from the context. In the present ink composition, the amounts add up to 100 wt%.

According to a first aspect, the present invention relates to an ink composition, wherein the ink composition comprises at least one network forming substance, an initiator, an amine acrylate and at least one oxygen scavenger selected from the group of a thiol compound having 1 to 8 carbon atoms and an amine compound, wherein the amine compound is a compound according to Formula I or Formula II,

NR₁R₂R₃ Formula I

(NR₁R₂R₄O)ₘM Formula II

wherein R₁, R₂ and R₃ are selected from a linear or branched C₁-C₈ alkyl group and a (CH₂)ₙOH group wherein n is an integer from 1-8, R₄ is selected from a (CH₂)ₒ group, wherein o is an integer from 1-8, m is an integer from 1-4, and M is a transition metal, and wherein the ink composition further comprises a gellant, preferably at least one wax, particularly a wax with a melting point of 45°C or higher.

According to certain embodiments, the present ink composition is UV curable, i.e. can be cured using UV irradiation. Thus, according to certain embodiments, the at least one network forming substance can be reacted using UV light, e.g. under activation of a suitable initiator, e.g. a photo initiator, forming a network in this way. In the present ink composition, also more than one initiator, e.g. two or more initiators, e.g. photo initiators, and/or more than one oxygen scavenger, e.g. two or more, can be contained. Preferably, only one oxygen scavenger is contained, so that the ink composition does not become too complicated, which could lead to reaction by-products during curing of the ink. The ink composition according to the present invention may be gellable, i.e. comprises a substance that can be gelled, thus forming a gelling ink, particularly a UV curable gelling ink. According to certain embodiments, the present ink composition is a fluid before curing, e.g. at a temperature between 0 and 100°C, e.g. between 15 and 80°C.

### Network forming substance

In the present ink composition, the at least one network forming substance is not particularly limited and can comprise substances comprising monomers or mixtures of monomers usually used for forming networks during hardening. Preferably, the at least one network forming substance can be polymerized by radical polymerization. According to certain embodiments, a mixture of monomers having different amounts of reactive groups, preferably epoxy and/or (meth)acrylate groups, further preferably only acrylate groups, can be used. In this regard, the reactive group is a group within the monomer that can react to form bonds, e.g. with other monomers or with capping substances that can terminate the reaction of the polymer. A monomer is a substance that can form a polymer upon reaction with other monomers, wherein the monomers can be the same or different. Within the invention, the reactive group is preferably a group that is polymerizable by radical polymerization, further preferably an acrylate group. It is not excluded that the network forming substance(s), e.g. acrylate(s) also contain(s) functional groups like hydroxyl, thiol, carboxy and/or amine groups. If e.g. an amine group is contained in the network forming substance, this can also function as an additional oxygen scavenger, and the amount of the oxygen scavenger in the ink composition can be accordingly reduced. According to certain embodiments, the monomers do not contain amine, hydroxy and/or carboxy groups, particularly no amine groups.

According to certain embodiments the present ink composition comprises at least one monomer with one polymerizable group, preferably an epoxy and/or (meth)acrylate group, further preferably an acrylate group (hereinafter also referred to monofunctional monomer), one monomer with two polymerizable groups, preferably epoxy and/or (meth)acrylate groups, further preferably acrylic groups (hereinafter also referred to as difunctional monomer) and one monomer with three or more polymerizable groups, preferably epoxy and/or (meth)acrylate groups, further preferably only acrylate groups (hereinafter also referred to as multifunctional monomer, e.g. trifunctional, tetrafunctional, pentafunctional, etc. monomer). According to certain embodiments, the present ink composition comprised no monomer with more than eight reactive groups, preferably epoxy and/or (meth)acrylate groups, further preferably only acrylate groups, i.e. only monomers with one, two, three, four, five, six, seven and/or eight polymerizable groups. Preferably the present ink composition comprises only monomers with one, two, three, four, five, and/or six polymerizable groups, further preferably only monomers with one, two, three and/or four polymerizable groups, preferably epoxy and/or (meth)acrylate groups, further preferably only (meth)acrylate groups. According to certain embodiments, the network forming substance comprises a monomer with at least three acrylate groups.

Monomers with too many polymerizable groups (herein also referred to as "functions") will result in a viscosity of the ink that is too high, making it difficult to apply the ink, particularly when jetting the ink. A viscosity that is too low will result in difficulties when the ink is applied on the recording medium. According to certain embodiments, a function with regard to a monomer refers to a group derived from acrylic acid, particularly an acrylate group (CH₂=CH-COO-).

According to certain embodiments, the present ink composition comprises at least a monofunctional, a difunctional and a tetrafunctional monomer to form a suitable network. The functions are preferably epoxy and/or (meth)acrylate groups, further preferably only acrylate groups. Among these, compounds with only acrylate functions / acrylate groups are particularly preferred for sufficient reactivity for forming a network. According to certain embodiments the function forming the network is a vinyl group. According to certain embodiments, the network forming substance comprises at least one monoacrylate, one diacrylate and one tetraacrylate for forming a tight network at sufficient reaction speed. The mono-, di- and tetraacrylate are not particularly limited and can be suitably selected.

By using high functional acrylates, i.e. monomers with three or more acrylate groups, a polymer network with a high molecular density is formed, which is particularly acting as a barrier in gelling inks, e.g. for preventing the wax migration process. In an embodiment, the high functional acrylates may be present in an amount of at least 10 wt% based on 100 wt% of the ink composition.

The use of acrylate-derived network forming substances is preferred in the present ink composition in consideration of health and safety aspects. Further, acrylates can also achieve less tackiness in the present ink upon printing and lead to decreased blooming.

The monomer with only one acrylate group/function is added to suitably set the viscosity of the present ink composition, particularly so that it can be jetted. The monomer with one acrylate group is preferably an aliphatic acrylate, preferably with 1 - 24 carbon atoms, preferably 1 - 20 carbon atoms, further preferably 1 - 8 carbon atoms. The aliphatic acrylate can be a linear or branched acrylate, i.e. an acrylate with a linear or branched alkyl residue, but is preferably linear. Optionally, the alkyl group may comprise an aliphatic cyclic group.

According to certain embodiments, the at least one network forming substance is contained in the present ink composition in an amount of 50 to 95 wt%, based on 100 wt% of the ink composition, preferably 60 to 94 wt.%, more preferably 70 to 92 wt%, further preferably 70 to 90 wt%, even further preferably 72 to 90 wt%.

According to certain embodiments, a compound with one acrylate group, a compound with two acrylate groups and a compound with three or more acrylate groups, particularly four acrylate groups, are contained with 3 to 10 wt%, 27 to 40 wt% and 30 to 44 wt%, respectively, based on 100 wt% of the ink composition, preferably 4 to 9 wt%, 29 to 39 wt% and 37 to 44 wt%, further preferably 4 to 8 wt%, 29 to 35 wt% and 37 to 43 wt%, with the remainder being further components in the ink composition.

### Oxygen scavenger

Further, the present ink composition comprises at least one oxygen scavenger. The oxygen scavenger is selected from the group of a thiol compound having 1 to 8 carbon atoms and an amine compound, wherein the amine compound is a compound according to Formula I or Formula II,

NR₁R₂R₃ Formula I

(NR₁R₂R₄O)ₘM Formula II

wherein R₁, R₂ and R₃ are selected from a linear or branched C₁-C₈ alkyl group and a (CH₂)ₙOH group wherein n is an integer from 1-8, R₄ is selected from a (CH₂)ₒ group, wherein o is an integer from 1-8, m is an integer from 1-4, and M is a transition metal, but is otherwise not particularly limited. The inventors have found that oxygen will attack the network forming substances during polymerization, leading to a deactivation of the polymerization process and to a formation of a less tight, even loose, network, from which substances contained in the ink, particularly gellants in gelling inks like waxes, can escape and diffuse to the surface, resulting in reduced gloss, i.e. blooming. When the above oxygen scavenger is used, an interaction with oxygen during formation of the network, e.g. UV curing, can be decreased or even prevented, and bigger chains in the network can form, thus making the network tighter, i.e. forming a dense polymer network, and decreasing or even preventing the migration of substances like gellants, e.g. waxes, to the surface of the ink and keeping them inside the cured ink layer. Thus, the addition of an oxygen scavenger enables a network formation, e.g. using UV curing, in an atmosphere comprising oxygen, e.g. air, as the oxygen can be scavenged. By creating a tight polymer network during curing, more freedom in choosing substances like gellants, particularly in gelling inks, is possible.

The oxygen scavenger is selected from the group of a thiol compound having 1 to 8 carbon atoms and an amine compound, wherein the amine compound is a compound according to Formula I or Formula II,

NR₁R₂R₃ Formula I

(NR₁R₂R₄O)ₘM Formula II

wherein R₁, R₂ and R₃ are selected from a linear or branched C₁-C₈ alkyl group and a (CH₂)ₙOH group wherein n is an integer from 1-8, R₄ is selected from a (CH₂)ₒ group, wherein o is an integer from 1-8, m is an integer from 1-4, and M is a transition metal. According to certain embodiments, mixtures of the oxygen scavengers can be used, e.g. mixtures of a thiol and an amine of Formula I and/or Formula II, or mixtures of different amines of Formula I and/or Formula II. According to certain embodiments, the oxygen scavenger comprises an amine of Formula I and/or Formula II, e.g. an amine of Formula I, an amine of Formula II, or both, to provide sufficient oxygen scavenging and maintain a high enough reaction speed during network formation, being not too effective in the reaction with oxygen and being used up too fast. The amine can bind the oxygen and thereby prevent oxygen inhibition. Reduced oxygen inhibition improves the rate of curing, which may result in the formation of a more crosslinked network.

The thiol compound having 1 to 8 carbon atoms is not particularly limited and can comprise linear or branched thiols having 1 to 8 carbon atoms. According to certain embodiments, a linear thiol with 1 to 8 carbon atoms, e.g. methyl mercaptan, ethyl mercaptan, n-propyl mercaptan, n-butyl mercaptan, etc. is used. According to certain embodiments, a branched thiol is used, e.g. i-proply mercaptan, i-butyl mercaptan, t-butyl mercaptan (t-butyl thiol), etc.

According to certain embodiments, the at least one oxygen scavenger is at least one amine compound, preferably one amine compound, wherein the amine compound is a compound according to Formula I or Formula II,

NR₁R₂R₃ Formula I

(NR₁R₂R₄O)ₘM Formula II

wherein R₁, R₂ and R₃ are selected from a linear or branched C₁-C₈ alkyl group and a (CH₂)ₙOH group wherein n is an integer from 1-8, R₄ is selected from a (CH₂)ₒ group, wherein o is an integer from 1-8, m is an integer from 1-4, and M is a transition metal. Preferably, the amine according to Formula I and/or Formula II is non-resonance stabilized.

In Formula I and/or Formula II, R₁, R₂ and R₃ are preferably selected from a linear C₁-C₈ alkyl group and a (CH₂)ₙOH group wherein n is an integer from 1-8. Examples of a linear C₁-C₈ alkyl group include methyl, ethyl, n-propyl, n-butyl, n-pentyl, etc., and examples of the (CH₂)ₙOH group wherein n is an integer from 1-8 include CH₂OH, (CH₂)₂OH, (CH₂)₃OH, (CH₂)₄OH, (CH₂)₅OH, etc.

Particular examples of the amine of Formula I include tri-ethanolamine (TEA) and methyldiethanolamine (MDEA).

In Formula II, the bond from the transition metal to the group (NR₁R₂R₄O) is via the O atom of the group R₄O, which also binds to the N atom of the amine, and groups R₄O can comprise CH₂O, (CH₂)₂O, (CH₂)₃O, (CH₂)₄O, (CH₂)₅O, etc.

The transition metal in Formula II is a metal of groups 3 to 12 of the periodic table, i.e. elements from Sc to Zn, including the rows below as well as lanthanides and actinides, preferably Ti, Zr and/or Hf. A preferable example thereof is Zr, and an exemplary compound of Formula II is Tetrakis[[2,2',2"-nitrilotris[ethanolato]](1-)-N,O]Zirconium(IV) (TEAZ).

The value of m is from 1 to 4 and corresponds to the amount of (NR₁R₂R₄O)-groups bound to the transition metal, and thus can correspond to the respective valence of the transition metal.

The cross linking density of the ink, particularly in gelling inks, can be increased by using amines, e.g. reactive, particularly high reactive, amines of Formula I and/or Formula II, like tri-ethanolamine (TEA), methyldiethanolamine (MDEA), Tetrakis[[2,2',2"-nitrilotris[ethanolato]](1-)-N,O]Zirconium(IV) (TEAZ).

Furthermore, by using amines as oxygen scavengers, one other component from an ink composition according to certain embodiments, namely the co-initiator, like EDB (ethyl-4-(dimethylamino)benzoate) can be reduced in amount or even skipped, e.g. used in combination with a type II photo-initiator like thioxanthone based photo-initiators, such as ITX (isopropylthioxanthone), since these amines also can act as co-initiator.

According to certain embodiments, the oxygen scavenger is contained in the present ink composition in an amount of 1 to 20 wt%, preferably 2 to 20 wt%, more preferably 3 to 20 wt%, even more preferably 4 to 15 wt%, further preferably 5 to 15 wt%, even further preferably 7 to 12 wt%, based on 100 wt% of the ink composition.

### Amine acrylate

The present ink composition further comprises at least one amine acrylate, preferably a branched amine acrylate, which supports the cross-linking of the ink-composition as well as the oxygen scavenger and thus further reduces or even prevents migration of molecules to the surface of the ink, particularly waxes in UV curable gelling inks.

The amine acrylate is not particularly limited and comprises at least one acrylate group. Examples thereof include Sartomer CN381 and CN386 and Genomer® 5161, 5142, 5271, and 5275 of Rahn AG, Switzerland, as well as other amine acrylates, which preferably are also known by the ability of preventing oxygen inhibition.

It is preferable in the present invention that at least one, e.g. one amine-derived oxygen scavenger and the amine acrylate are used in combination with one or more network forming substances based on acrylates, According to certain embodiments, the present ink composition comprises at least one amine as oxygen scavenger, particularly a reactive amine, an amine acrylate, and at least one polyfunctional acrylate, i.e. the ink composition comprises at least one, e.g. one, amine as oxygen scavenger, particularly a reactive amine, and at least one polyfunctional acrylate.

Using amines as oxygen scavenger in combination with amine acrylates, a much denser polymer network in a cured ink layer, can be formed, from which further substances like gellants in gelling inks, even linear wax molecules, cannot escape, thus preventing wax migration from a cured UV ink.

According to certain embodiments, the amine acrylate is contained in the present ink composition in an amount of 1 to 20 wt%, preferably 2 to 20 wt%, more preferably 3 to 20 wt%, even more preferably 4 to 15 wt%, further preferably 5 to 15 wt%, even further preferably 7 to 12 wt%, based on 100 wt% of the ink composition.

### Gelling component / wax

The present ink composition may contain at least one gelling component like a wax, particularly when used as gelling ink. The present ink composition comprises at least one gellant. The gellant used in the present ink composition is not particularly limited, and those usually used in gelling inks can be contained, e.g. waxes and/or those disclosed in US 8,262,210 B2. Due to the use of the oxygen scavenger in the present ink composition more freedom in the choice of waxes when formulating UV gelling inks can be obtained.

According to certain embodiments, the at least one gellant comprises at least one wax, particularly a wax with a melting point of 45°C or higher, preferably 55°C or higher, further preferably 65°C or higher, even further preferably 70°C or higher, e.g. 72°C or higher. It is preferably that the wax does not melt too much during printing and does not melt during curing. According to certain embodiments, the gellant comprises a branched wax, particularly a branched way with at least one quaternary carbon atom. According to certain embodiments, the wax is a wax, e.g. non migrating wax, having a branched structure and/or at least one reactive group like an acrylate or epoxy group. Due to the formation of the tight network, the gellant, e.g. wax, can be sufficiently fixed in the ink upon printing and curing, and migration of the gellant to the surface of the ink can be prevented. Using a wax having a branched structure and/or at least one reactive group like an acrylate or epoxy group particularly a non-migrating wax, a gloss level in the printed ink can be kept constant over time.

According to certain embodiments, a gellant, e.g. wax, is contained in the present ink composition in an amount of 0 to 10 wt%, preferably 0.5 to 8 wt%, further preferably 1 to 5 wt%, based on 100 wt% of the ink composition.

### Initiator

In the present ink composition, the applied initiator is not particularly limited, but a photo initiator, as used in UV curable inks, is preferred. A photo initiator can convert absorbed light energy, e.g. UV or visible light, into chemical energy in the form of initiating species, free radicals or cations. Preferably the photo initiator in the present ink composition is activated by UV light.

For photo initiators, two types of photo initiators exist based on the mechanism by which initiating radicals are formed, i.e. a type I photo initiator and a type II photo initiator. Type I photo initiators are cleaved by irradiation at a reactive bond, yielding free radicals. Type II photo initiators are excited by irradiation, and in the excited state the photo initiator interacts with a co-initiator to generate free radicals. Thus, a type II photo initiator requires a second molecule to interact. The type I and type II photo initiators are not particularly limited, and many suitable compounds are known. Type I photo initiators comprise, for example, benzoin ethers, benzyl ketals, α-dialkyloxyacetophenones, α-hydroxyalkylphenones, α-aminoalkylphenones and acylphosphine oxides, e.g. 1-hydroxy-cyclohexylphenyl-ketone, and type II photo initiators comprise, for example, benzophenones and thioxanthones.

According to certain embodiments, the present ink composition comprises at least one type II photo initiator. In the ink composition, the oxygen scavenger can function - according to certain embodiments - as co-initiator for a type II photo initiator, particularly when the oxygen scavenger is an amine, e.g. in case the type II photo initiator is a thioxanthone, e.g. isopropylthioxanthone. When a type II photo initiator is contained, the present ink composition can further comprise a co-initiator which is not particularly limited. However, according to certain embodiments the oxygen scavenger can function as co-initiator, so that it is possible to add no further co-initiator if enough oxygen scavenger is contained. In such case care should be taken that enough oxygen scavenger remains in the ink composition upon initiation of polymerization.

According to certain embodiments, the initiator comprises at least one type I and at least one type II photo initiator. This way the polymerization can be started effectively and an extra amount of co-initiator for the type II photo initiator can be reduced, particularly when the co-initiator also is used as oxygen scavenger, as described above.

According to certain embodiments, the initiator, preferably photo initiator, is contained in the present ink composition in an amount of 3 to 20 wt%, preferably 4 to 15 wt%, further preferably 5 to 15 wt%, even further preferably 5 to 8 wt%, based on 100 wt% of the ink composition. According to certain embodiments, the initiator, preferably photo initiator, is contained is contained in an amount that enables the formation of as many radicals as possible during polymerization, e.g. radical polymerization, e.g. UV curing.

### Further components

Furthermore, the present ink composition can comprise a suitable solvent and optionally one or more co-solvents. The solvent and optional co-solvents are not particularly limited as long as they can dissolve the at least one network-forming substance, but preferably substantially no solvent and/or co-solvent are contained, and further preferably no solvent and/or co-solvent are contained.

In addition, the present ink composition can comprise at least one colorant, although also applications without colorant are possible, e.g. where a clear print is necessary. The colorant is not particularly limited, and those usually used in inks, particularly in UV-curable inks, can be used, including dyes, pigments, mixtures thereof, and the like, provided that the colorant can be dissolved or dispersed in the ink vehicle. The color of the colorant is not particularly restricted, and any color can be used, including those used in normal printing, e.g. Cyan, Magenta, Yellow and blacK, CMYK. For example, pigments are used as they can be easily dispersed in the ink. Examples of pigments are not particularly limited, but preferred are an azo, azomethine, methine, diphenylmethane, triphenylmethane, quinacridone, anthraquinone, perylene, indigo, quinophthalone, isoindolinone, isoindoline, azine, oxazine, thiazine, dioxazine, thiazole, phthalocyanine, or diketopyrrolopyrrole dye.

For example, inorganic pigments and organic pigments for black and color inks are exemplified. These pigments may be used alone or in combination. As the inorganic pigments, it is possible to use carbon blacks produced by a known method such as a contact method, furnace method and thermal method, in addition to titanium oxide, iron oxide, calcium carbonate, barium sulfate, aluminum hydroxide, barium yellow, cadmium red and chrome yellow.

As the organic pigments, it is possible to use azo pigments (including azo lake, insoluble azo pigments, condensed pigments, chelate azo pigments and the like), polycyclic pigments (e.g., phthalocyanine pigments, perylene pigments, perynone pigments, anthraquinone pigments, quinacridone pigments, dioxazine pigments, indigo pigments, thioindigo pigments, isoindolinone pigments, and quinophthalone pigments), dye chelates (e.g., basic dye type chelates, and acidic dye type chelates), nitro pigments, nitroso pigments, aniline black.

Specific pigments which are preferably usable are listed below.

Examples of pigments for magenta or red include: C.I. Pigment Red 1, C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 17, C.I. Pigment Red 22, C.I. Pigment Red 23, C.I. Pigment Red 31, C.I. Pigment Red 38, C.I. Pigment Red 48:1, C.I. Pigment Red 48:2 (Permanent Red 2B(Ca)), C.I. Pigment Red 48:3, C.I. Pigment Red 48:4, C.I. Pigment Red 49:1, C.I. Pigment Red 52:2; C.I. Pigment Red 53:1, C.I. Pigment Red 57:1 (Brilliant Carmine 6B), C.I. Pigment Red 60:1, C.I. Pigment Red 63:1, C.I. Pigment Red 64:1, C.I. Pigment Red 81. C.I. Pigment Red 83, C.I. Pigment Red 88, C.I. Pigment Red 101 (colcothar), C.I. Pigment Red 104, C.I. Pigment Red 106, C.I. Pigment Red 108 (Cadmium Red), C.I. Pigment Red 112, C.I. Pigment Red 114, C.I. Pigment Red 122 (Quinacridone Magenta), C.I. Pigment Red 123, C.I. Pigment Red 139, C.I. Pigment Red 44, C.I. Pigment Red 146, C.I. Pigment Red 149, C.I. Pigment Red 166, C.I. Pigment Red 168, C.I. Pigment Red 170, C.I. Pigment Red 172, C.I. Pigment Red 177, C.I. Pigment Red 178, C.I. Pigment Red 179, C.I. Pigment Red 185, C.I. Pigment Red 190, C.I. Pigment Red 193, C.I. Pigment Red 209, C.I. Pigment Red 219 and C.I. Pigment Red 222, C.I. Pigment Violet 1 (Rhodamine Lake), C.I. Pigment Violet 3, C.I. Pigment Violet 5:1, C.I. Pigment Violet 16, C.I. Pigment Violet 19, C.I. Pigment Violet 23 and C.I. Pigment Violet 38.

Examples of pigments for orange or yellow include: C.I. Pigment Yellow 1, C.I. Pigment Yellow 3, C.I. Pigment Yellow 12, C.I. Pigment Yellow 13, C.I. Pigment Yellow 14, C.I. Pigment Yellow 15, C.I. Pigment Yellow 15:3, C.I. Pigment Yellow 17, C.I. Pigment Yellow 24, C.I. Pigment Yellow 34, C.I. Pigment Yellow 35, C.I. Pigment Yellow 37, C.I. Pigment Yellow 42 (yellow iron oxides), C.I. Pigment Yellow 53, C.I. Pigment Yellow 55, C.I. Pigment Yellow 74, C.I. Pigment Yellow 81, C.I. Pigment Yellow 83, C.I. Pigment Yellow 93, C.I. Pigment Yellow 94, C.I. Pigment Yellow 95, C.I. Pigment Yellow 97, C.I. Pigment Yellow 98, C.I. Pigment Yellow 100, C.I. Pigment Yellow 101, C.I. Pigment Yellow 104, C.I. Pigment Yellow 408, C.I. Pigment Yellow 109, C.I. Pigment Yellow 110, C.I. Pigment Yellow 117, C.I. Pigment Yellow 120, C.I. Pigment Yellow 128, C.I. Pigment Yellow 138, C.I. Pigment Yellow 139, C.I. Pigment Yellow 150, C.I. Pigment Yellow 151, C.I. Pigment Yellow 153, C.I. Pigment Yellow 180 and C.I. Pigment Yellow 183; C.I. Pigment Orange 5, C.I. Pigment Orange 13, C.I. Pigment Orange 16, C.I. Pigment Orange 17, C.I. Pigment Orange 31, C.I. Pigment Orange 34, C.I. Pigment Orange 36, C.I. Pigment Orange 43, and C.I. Pigment Orange 51.

Examples of pigments for green or cyan include: C.I. Pigment Blue 1, C.I. Pigment Blue 2, C.I. Pigment Blue 15, C.I. Pigment Blue 15:1, C.I. Pigment Blue 15:2, C.I. Pigment Blue 15:3 (Phthalocyanine Blue), C.I. Pigment Blue 15:4, C.I. Pigment Blue 16, C.I. Pigment Blue 17:1, C.I. Pigment Blue 56, C.I. Pigment Blue 60, C.I. Pigment Blue 63, C.I. Pigment Green 1, C.I. Pigment Green 4, C.I. Pigment Green 7, C.I. Pigment Green 8, C.I. Pigment Green 10, C.I. Pigment Green 17, C.I. Pigment Green 18 and C.I. Pigment Green 36.

In addition to the above pigments, when red, green, blue or intermediate colors are required, it is possible that the following pigments are employed individually or in combination thereof. Examples of employable pigments include: C.I. Pigment Red 209, 224, 177, and 194, C.I. Pigment Orange 43, C.I. Vat Violet 3, C.I. Pigment Violet 19, 23, and 37, C.I. Pigment Green 36, and 7, C.I. Pigment Blue 15:6.

Further, examples of pigments for black include: C.I. Pigment Black 1, C.I. Pigment Black 6, C.I. Pigment Black 7 and C.I. Pigment Black 11. Specific examples of pigments for black color ink usable in the present invention include carbon blacks (e.g., furnace black, lamp black, acetylene black, and channel black); (C.I. Pigment Black 7) or metal-based pigments (e.g., copper, iron (C.I. Pigment Black 11), and titanium oxide; and organic pigments (e.g., aniline black (C.I. Pigment Black 1).

Apart from that, components used in inks, particularly UV curable inks, can be contained, comprising surfactants, antioxidants, penetrants, biocides, etc., in usual amounts. According to certain embodiments, one or more surfactants are contained in the present ink composition to suitably set the viscosity of the ink composition, and to improve an ink ejection property and/or the wettability of the surface of a recording medium, and the image density and color saturation of the image formed and reducing white spots therein. The surface tension and viscosity of the ink composition can be suitably set according to need and can be determined using standard methods.

According to certain embodiments, the present ink composition comprises at least one polymerization inhibitor to increase the shelf life of the ink composition, particularly when using highly reactive amines in a UV gelling ink. The type of polymerization inhibitor is not particularly limited and can be suitably set. For example, suitable polymerization inhibitors for acryl-based polymerization systems include phenothiazine and compounds with similar structures, namely, phenoxazine, phenothiazine, promazine, promazine hydrochloride, N,N'-dimethylphenazine, carbazole, N-ethylcarbazole, N-benzylphenothiazine, and N-(1-phenylethyl)phenothiazine, as well as derivatives thereof. Alternatively or additionally, hindered phenols, such as hydroquinone, 4-methoxyphenol, methoxyhydroquinone and BHT can be used. Alternatively or dditionally, Genorad 16, Genorad 18, Genorad 20, Genorad 21 or Genorad 22 can be used. Combinations of inhibitors may be used. The amount of the polymerization inhibitor is not particularly limited as long as it enables a polymerization inhibition during storage but does not prevent polymerization during the printing process. Preferably, the inhibitor is present in an amount of less than 4wt% based on the total weight of the ink composition, more preferably in an amount of less than 3wt% based on the total weight of the ink composition, such as in an amount of less than 2wt% based on the total weight of the ink composition, for example in an amount of less than 1wt% based on the total weight of the ink composition.

According to certain embodiments, the present ink compositions can be jetted, e.g. at temperatures of 100°C or less, preferably from 20 to 100°C, further preferably from 50 to 90°C, particularly from 60 to 85°C, e.g. about 70° C. A suitable jetting temperature can be set by using the corresponding components in respective amounts for setting the temperature, e.g. by adjusting the viscosity and/or suitably selecting the melting point of the gellant.

According to another aspect, the present invention relates to a printing method, comprising printing the present ink composition on a recording medium.

Suitable recording media for use in a printing process using an ink/ink composition or set of inks (e.g. Cyan, Magenta, Yellow and blacK, CMYK) according to the present invention are not particularly limited to any type. The recording/receiving medium may be suitably selected depending on the intended application. Suitable recording/receiving media may be, but are not limited to plain paper (for example Océ Red Label) and plastic sheets (for example PE, PP, PVC and PET films).

Of particular interest in the context of the present invention are Machine Coated (MC) media (also known as offset coated media) and glossy (coated) media, particularly MC media. MC media are designed for use in conventional printing processes, for example offset printing and show good absorption characteristics with respect to solvents used in inks used in such printing processes, which are usually organic solvents. MC and glossy media show inferior absorption behavior with respect to water (worse than plain paper, better than plastic sheets), and hence aqueous inks.

Machine coated or offset coated media comprise a base layer and a coating layer.

The base layer may be a sheet of paper mainly made of wood fibers or a non-woven fabric material comprising wood fibers combined with synthetic fibers. The base layer may be made of wood pulp or recycled paper pulp and may be bleached.

As an internal filler for the base, a conventional white pigment may be used. For example, the following substances may be used as a white pigment: an inorganic pigment such as precipitated calcium carbonate, heavy calcium carbonate, kaolin, clay, talc, calcium sulfate, barium sulfate, titanium dioxide, zinc oxide, zinc sulfide, zinc carbonate, satin white, aluminum silicate, diatomaceous earth, calcium silicate, magnesium silicate, synthetic silica, aluminum hydroxide, alumina, lithophone, zeolite, magnesium carbonate, or magnesium hydrate; and an organic pigment such as styrene plastic pigment, acrylic plastic pigment, polyethylene, microcapsule, urea resin, or melamine resin. These may be used alone or in combination.

As an internal sizing agent used when producing the base, a neutral rosin size used for neutral papermaking, alkenyl succinic anhydride (ASA), alkyl ketene dimer (AKD), or a petroleum resin size may be used. Especially, a neutral rosin size and alkenyl succinic anhydride are preferable. Alkyl ketene dimer has a high sizing effect and therefore provides an enough sizing effect with a small amount. However, since alkyl ketene dimer reduces the friction coefficient of the surface of recording paper (medium), recording paper made using alkyl ketene dimer may cause a slip when being conveyed in an ink jet recording apparatus.

The thickness of the base is not particularly limited and may be suitably selected in accordance with the intended use. It is, however, preferably 50 µm to 300 µm. The basis weight of the base is preferably 45 g/m² to 290 g/m².

The coating layer may comprise a (white) pigment, a binder and may further contain a surfactant and other components as required.

An inorganic pigment or a combination of an inorganic pigment and an organic pigment can be used as the pigment.

Examples of the inorganic pigment include kaolin, talc, calcium bicarbonate, light calcium carbonate, calcium sulfite, amorphous silica, titanium white, magnesium carbonate, titanium dioxide, aluminum hydroxide, calcium hydroxide, magnesium hydroxide, zinc hydroxide and chlorite. Among these, kaolin is particularly preferable due to its superior glossability. The addition amount of the kaolin is preferably 50 parts by mass or more with respect to 100 parts of the binder in the coating layer. When the amount of kaolin is less than 50 parts by mass, adequate effects are unable to be obtained with respect to glossiness.

Examples of the organic pigment include (aqueous) dispersions of, for example, styrene-acrylic copolymer particles, styrene-butadiene copolymer particles, polystyrene particles or polyethylene particles. These organic pigments may be used in combination. The addition amount of the organic pigment is preferably 2 parts by mass to 20 parts by mass with respect to 100 parts by mass of the total amount of the pigment in the coating layer. Since the organic pigment has superior glossability and the specific gravity thereof is small in comparison with inorganic pigment, it allows the obtaining of a coating layer having high bulk, high gloss and satisfactory surface coatability.

An aqueous resin is preferably used for the binder. At least one of a water-soluble resin and a water-dispersible resin is preferably used for the aqueous resin. There are no particular limitations on the water-soluble resin, the water-soluble resin can be suitably selected according to the intended use. Examples thereof include polyvinyl alcohol and polyvinyl alcohol modification products such as anion-modified polyvinyl alcohol, cation-modified polyvinyl alcohol or acetal-modified polyvinyl alcohol; polyurethane; polyvinyl pyrrolidone and polyvinyl pyrrolidone modification products such as copolymers of polyvinyl pyrrolidone and vinyl acetate, copolymers of vinyl pyrrolidone and dimethylaminoethyl methacrylate, copolymers of quaternized vinyl pyrrolidone and dimethylaminoethyl methacrylate or copolymers of vinyl pyrrolidone and methacrylamide propyl trimethyl ammonium chloride; celluloses such as carboxymethyl cellulose, hydroxyethyl cellulose or hydroxypropyl cellulose; cellulose modification products such as cationized hydroxyethyl cellulose; synthetic resins such as polyester, polyacrylic acid (ester), melamine resin or modification products thereof or copolymers of polyester and polyurethane; and poly(meth)acrylic acid, poly(meth)acrylamide, oxidized starch, phosphoric acid-esterified starch, self-modifying starch, cationized starch, various types of modified starch, polyethylene oxide, sodium polyacrylate and sodium arginate. These water-soluble resins may be used alone or in combination.

There are no particular limitations on the water-dispersible resin, a water-dispersible resin can be suitably selected in accordance with the intended use, and examples thereof include polyvinyl acetate, ethylene-vinyl acetate copolymers, polystyrene, styrene-(meth)acrylic acid ester copolymers, (meth)acrylic acid ester copolymers, vinyl acetate-(meth)acrylic acid (ester) copolymers, styrene-butadiene copolymers, ethylene-propylene copolymers, polyvinyl ether and silicone-acrylic copolymers. In addition, a crosslinking agent such as methylolated melamine, methylolated urea, methylolated hydroxypropylene urea or isocyanate may also be contained, and the water-dispersible resin may self-crosslink with a copolymer containing a unit such as N-methylolacrylamide. A plurality of these aqueous resins can also be used simultaneously. The addition amount of the aqueous resin is preferably 2 parts by mass to 100 parts by mass and more preferably 3 parts by mass to 50 parts by mass with respect to 100 parts by mass of the pigment. The amount of the aqueous resin is determined so that the liquid absorption properties of the recording media are within a desired range.

The printing method is not particularly limited as long as the ink composition is deposited on the recording medium. According to certain embodiments, the ink composition is jetted on the recording medium, e.g. using an ink-jet printing equipment, e.g. as described in further detail below. A suitable application method for applying the ink composition, as well as suitable other steps used in printing an ink composition, particularly a gelling UV curable ink composition, is e.g. known from US 2015/062271 A1, which is incorporated herein by reference in its entirety, particularly with reference to the printing method. According to certain embodiments, a UV curable ink is applied in the present printing method, particularly a UV curable gelling ink.

Apart from the printing step, steps usually carried out in printing ink compositions, particularly UV curable ink compositions, e.g. UV curable gelling ink compositions can be carried out, which are not particularly limited, as e.g. described before. According to certain embodiments, the ink composition is UV cured after printing on the recording medium. According to certain embodiments, the printing is carried out in air. Due to the use of oxygen scavengers, the interaction of oxygen with the ink composition is sufficiently reduced or even prevented, making a complicated control of the atmosphere during printing and curing, e.g. using complicated exhaust technology, less necessary or even unnecessary. According to certain embodiments, the printed image is fixed at a temperature below 70°C, preferably below 50°C, further preferably below 40°C.

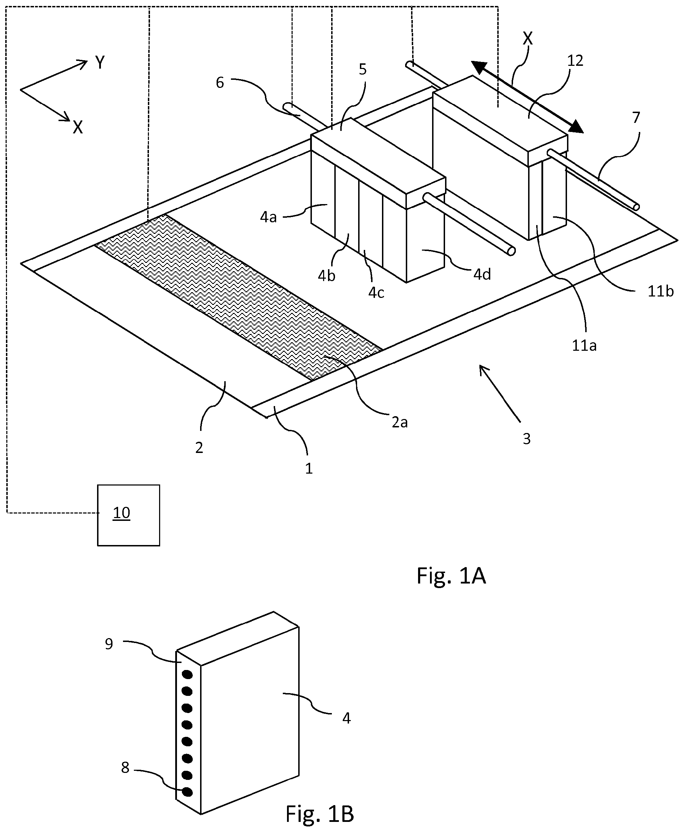

An exemplary printing process for printing a UV curable gelling ink is described in the following with reference to Figures 1A and 1B, showing an exemplary ink-jet printing arrangement that can be used for carrying out the present printing method. As a matter of course, also other printing assemblies except ink-jet printing assemblies can be used.

Fig. 1A shows an ink-jet printing assembly 3. The ink-jet printing assembly 3 comprises supporting means for supporting an image recording/receiving medium 2. The supporting means are shown in Fig. 1A as a flat surface 1, but alternatively, the supporting means may be a platen, for example a rotatable drum that is rotatable around an axis. The supporting means may be optionally provided with suction holes for holding the image recording medium 2 in a fixed position with respect to the supporting means. The ink jet printing assembly 3 comprises print heads 4a - 4d, mounted on a scanning print carriage 5. The scanning print carriage 5 is guided by suitable guiding means 6 to move in reciprocation in the main scanning direction X. Each print head 4a - 4d comprises an orifice surface 9, which orifice surface 9 is provided with at least one orifice 8, as is shown in Fig. 1B. The print heads 4a - 4d are configured to eject droplets of the present ink composition as marking material onto the image recording medium 2.

The image recording medium 2 may be a medium in web or in sheet form and may be composed of e.g. paper, cardboard, label stock, coated paper, plastic or textile. Alternatively, the image receiving medium 2 may also be an intermediate member, endless or not. Examples of endless members, which may be moved cyclically, are a belt or a drum. The image recording medium 2 is moved in the sub-scanning direction Y over the flat surface 1 along four print heads 4a - 4d provided with the present ink composition as fluid marking material.

The image recording medium 2, as depicted in Fig. 1A, can be locally heated or cooled in the temperature control region 2a. In the temperature control region 2a, temperature control means (not shown), such as heating and/or cooling means may be provided to control the temperature of the recording medium 2. Optionally, the temperature control means may be integrated in the supporting means for supporting an image recording medium 2. The temperature control means may be electrical temperature control means. The temperature control means may use a cooling and/or heating liquid to control the temperature of the image recording medium 2. The temperature control means may further comprise a sensor (not shown) for monitoring the temperature of the image recording medium 2.

A scanning print carriage 5 carries the four print heads 4a - 4d and may be moved in reciprocation in the main scanning direction X parallel to the platen 1, such as to enable scanning of the image recording medium 2 in the main scanning direction X. Only four print heads 4a - 4d are depicted for demonstrating the invention. In practice an arbitrary number of print heads may be employed. In any case, at least one print head 4a - 4d per color of marking material is placed on the scanning print carriage 5. For example, for a black-and-white printer, at least one print head 4a - 4d, usually containing black marking material is present. Alternatively, a black-and-white printer may comprise a white marking material, which is to be applied on a black image recording medium 2. For a full-color printer, containing multiple colors, at least one print head 4a - 4d for each of the colors, usually black, cyan, magenta and yellow is present. Often, in a full-color printer, black marking material is used more frequently in comparison to differently colored marking material. Therefore, more print heads 4a - 4d containing black marking material may be provided on the scanning print carriage 5 compared to print heads 4a - 4d containing marking material in any of the other colors. Alternatively, the print head 4a - 4d containing black marking material may be larger than any of the print heads 4a - 4d, containing a differently colored marking material.

The carriage 5 is guided by guiding means 6. These guiding means 6 may be a rod as depicted in Fig. 1A. Although only one rod 6 is depicted in Fig. 1A, a plurality of rods may be used to guide the carriage 5 carrying the print heads 4. The rod may be driven by suitable driving means (not shown). Alternatively, the carriage 5 may be guided by other guiding means, such as an arm being able to move the carriage 5. Another alternative is to move the image recording material 2 in the main scanning direction X.

Each print head 4a - 4d comprises an orifice surface 9 having at least one orifice 8, in fluid communication with a pressure chamber containing the present ink composition as fluid marking material provided in the print head 4a - 4d. On the orifice surface 9, a number of orifices 8 is arranged in a single linear array parallel to the sub-scanning direction Y, as is shown in Fig. 1B. Alternatively, the nozzles may be arranged in the main scanning direction X. Eight orifices 8 per print head 4a - 4d are depicted in Fig. 1B, however obviously in a practical embodiment several hundreds of orifices 8 may be provided per print head 4a - 4d, optionally arranged in multiple arrays.

As depicted in Fig. 1A, the respective print heads 4a - 4d are placed parallel to each other. The print heads 4a - 4d may be placed such that corresponding orifices 8 of the respective print heads 4a - 4d are positioned in-line in the main scanning direction X. This means that a line of image dots in the main scanning direction X may be formed by selectively activating up to four orifices 8, each of them being part of a different print head 4a - 4d. This parallel positioning of the print heads 4a - 4d with corresponding in-line placement of the orifices 8 is advantageous to increase productivity and/or improve print quality. Alternatively multiple print heads 4a - 4d may be placed on the print carriage adjacent to each other such that the orifices 8 of the respective print heads 4a - 4d are positioned in a staggered configuration instead of in-line. For instance, this may be done to increase the print resolution or to enlarge the effective print area, which may be addressed in a single scan in the main scanning direction X. The image dots are formed by ejecting droplets of the present ink composition from the orifices 8.

The ink-jet printing assembly 3 may further comprise curing means 11 a, 11b. As shown in Fig. 1A, a scanning print carriage 12 carries the two curing means 11 a, 11 b and may be moved in reciprocation in the main scanning direction X parallel to the platen 1, such as to enable scanning of the image recording medium 2 in the main scanning direction X. Alternatively, only one or more than two curing means may be applied. It is also possible to apply page-wide curing means. If page-wide curing means are provided, then it may not be necessary to move the curing means in reciprocation in the main scanning direction X.

The carriage 12 is guided by guiding means 7. These guiding means 7 may be a rod as depicted in Fig. 1A. Although only one rod 7 is depicted in Fig. 1A, a plurality of rods may be used to guide the carriage 12 carrying the curing means 11. The rod 7 may be driven by suitable driving means (not shown). Alternatively, the carriage 12 may be guided by other guiding means, such as an arm being able to move the carriage 12.

The curing means may be energy sources, such as actinic radiation sources, accelerated particle sources or heaters. Examples of actinic radiation sources are UV radiation sources or visible light sources. UV radiation sources are preferred, because they are particularly suited to cure UV curable inks by inducing a polymerization reaction in such inks. Examples of suitable sources of such radiation are lamps, such as mercury lamps, xenon lamps, carbon arc lamps, tungsten filaments lamps, light emitting diodes (LED's) and lasers. In the embodiment shown in Fig. 1A, the first curing means 11 a and the second curing means 11 b are positioned parallel to one another in the sub scanning direction Y. The first curing means 11 a and the second curing means 11 b may be the same type of energy source or may be different type of energy source. For example, when the first and second curing means 11 a, 11 b, respectively both emit actinic radiation, the wavelength of the radiated emitted by the two respective curing means 11 a, 11 b may differ. Additionally or alternatively, the intensity of the radiation emitted by the first curing means 11a and the second curing means 11 b may be the same or different. The curing means 11 are positioned downstream with regard to the print heads 4 in the paper transport direction Y.

The flat surface 1, the temperature control means, the carriage 5, the print heads 4a - 4d, the carriage 12 and the first and second curing means 11 a, 11 b are controlled by suitable controlling means 10. The controlling means 10 may comprise a computer and/or a user interface. In addition, ink jet printing assembly 3 may comprise retrieving means for retrieving a desired gloss level of an image to be printed. For example, the retrieving means may comprise a user interface where an operator of the ink jet printing assembly 3 can input a desired gloss level. The user interface may comprise a display unit and a control panel. Alternatively, the control panel may be integrated in the display unit, for example in the form of a touch-screen control panel. The local user interface unit is connected to a controlling means 10 placed inside the printing apparatus. The controller, for example a computer, comprises a processor adapted to issue commands to the print engine, for example for controlling the print process. The ink-jet printing assembly 3 as an example of an image forming assembly/apparatus may optionally be connected to a network

The ink-jet printing assembly 3 may receive printing jobs via the network. Further, optionally, the controller of the printer may be provided with a USB port, so printing jobs may be sent to the printer via this USB port.

In another aspect, the present invention relates to a method of preparing an ink composition, comprising mixing at least one network forming substance, an initiator, a gellant, an amine acrylate and at least one oxygen scavenger selected from the group of a thiol compound having 1 to 8 carbon atoms and an amine compound, wherein the amine compound is a compound according to Formula I or Formula II,

NR₁R₂R₃ Formula I

(NR₁R₂R₄O)ₘM Formula II

wherein R₁, R₂ and R₃ are selected from a linear or branched C₁-C₈ alkyl group and a (CH₂)ₙOH group wherein n is an integer from 1-8, R₄ is selected from a (CH₂)ₒ group, wherein o is an integer from 1-8, m is an integer from 1-4, and M is a transition metal.

The mixing of the components of the ink composition is not particularly limited and can be suitably carried out as is usual for ink compositions, particularly UV-curable ink compositions. The components of the ink can be added in any suitable way as long as a proper mixing of the components is ensured. For example, the initiator can be added after a polymerization inhibitor so that the polymerization inhibiter can prevent an unwanted polymerization of the ink prior to printing, e.g. storage, and/or the gelling component can be added later.

It is also not excluded that further steps are carried out after and/or during mixing, e.g. a further homogenization and/or a filtering step for removing unwanted extraneous particles, etc. Further, the ink composition can also be suitably stored prior to use.

### EXAMPLES

### Reference Example and Example 1

Print samples have been made by rodcoating a recording medium (MPI-2000 form Avery) with an ink composition. The print samples were cured using Fusion Light Hammer 6 conveyor belt setup (from Heraeus Noblelight) provided with a D-bulb mercury lamp. The distance between the print sample and the lamp was 11 cm; the speed of the conveyor belt was 9 m/min. Images have been made using one color ink using the above setup using the inks with the recipes provided in Tables 1 (ink composition not in accordance with the present invention; Comparative Example) and 2 (ink composition according to the present invention; Example).

**Table 1: Ink of Comparative example**

| Component | mass [grams] | Amount [wt%] (based on ink) |
|---|---|---|
| di-acrylate | 228 | 38.8 |
| tetra-acrylate | 186 | 31.6 |
| inhibitor | 16.2 | 2.8 |
| pigment | 9 | 1.5 |
| Genomer 1122 (urethane acrylate) | 33.9 | 5.8 |
| Aliphatic monofunctional acrylate | 33.9 | 5.8 |
| Stearon (gellant) | 4.5 | 0.7 |
| Docosanol (gellant) | 12 | 2.0 |
| surfactant | 4.2 | 0.7 |
| Type I Photoinitiator | 18 | 3.1 |
| Type II Photoinitiator | 18 | 3.1 |
| Co-initiator | 24 | 4.1 |

**Table 2: Ink of example (with amine oxygen scavenger and amine acrylate)**

| Component | mass [grams] | Amount [wt%] (based on ink) |
|---|---|---|
| di-acrylate | 246 | 39.4 |
| tetra-acrylate | 198 | 31.7 |
| inhibitor | 16.2 | 2.7 |
| pigment | 9 | 1.5 |
| Genomer 5161 (amine acrylate) | 36 | 5.8 |
| Aliphatic monofunctional acrylate | 36 | 5.8 |
| Stearon (gellant) | 4.5 | 0.7 |
| Docosanol (gellant) | 12 | 2.0 |
| surfactant | 4.2 | 0.7 |
| Type I Photoinitiator | 18 | 2.9 |
| Type II Photoinitiator | 18 | 2.9 |
| methyldiethanolamine | 24 | 3.9 |

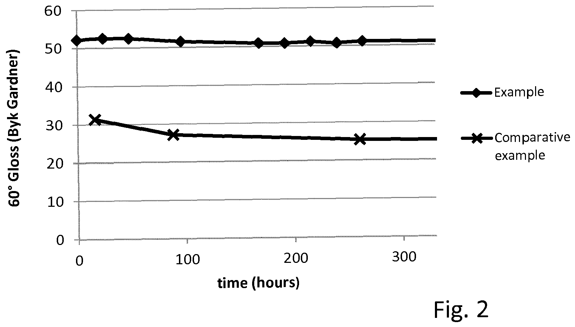

The obtained printed papers in the Reference Example and Example 1 were tested for their gloss values as an indication of blooming, and the results are shown in Fig. 2. The gloss values were measured using a micro-TRI-gloss glossmeter from Byk Gardener using the internal calibration and measurement method. In Fig. 2, the 60% gloss (Byk Gardener) was measured over time after curing. As can be seen from Fig. 2, the use of an ink composition according to the present invention comprising an oxygen scavenger and an amine acrylate, leads to improved gloss values that can be retained over time.

With the present ink composition, the amount of blooming can be decreased and even prevented during and after printing, particularly in gelling UV curable inks.

## Claims

1. Ink composition, wherein the ink composition comprises at least one network forming substance, an initiator, an amine acrylate and at least one oxygen scavenger selected from the group of a thiol compound having 1 to 8 carbon atoms and an amine compound, wherein the amine compound is a compound according to Formula I or Formula II,
NR₁R₂R₃ Formula I
(NR₁R₂R₄O)ₘM Formula II
wherein R₁, R₂ and R₂ are selected from a linear or branched C₁-C₈ alkyl group and a (CH₂)ₙOH group wherein n is an integer from 1-8 , R₄ is selected from a (CH₂)ₒ group, wherein o is an integer from 1-8, m is an integer from 1-4, and M is a transition metal, and wherein the ink composition further comprises a gellant, preferably at least one wax, particularly a wax with a melting point of 45°C or higher.

2. Ink composition according to claim 1, wherein the oxygen scavenger is an amine according to Formula I.

3. Ink composition of any one of the preceding claims, wherein the composition comprises at least one amine, particularly a reactive amine, and at least one polyfunctional acrylate.

4. Ink composition of any one of the preceding claims, wherein the ink composition is UV curable.

5. Ink composition of any one of the preceding claims, wherein the network forming substance comprises a monomer with at least three acrylate groups.

6. Ink composition of any one of the preceding claims, wherein the composition comprises at least one branched amine acrylate.

7. Ink composition of any one of the preceding claims, wherein the initiator comprises a photo initiator, particularly a type II photo initiator, preferably at least one type I and at least one type II photo initiator.

8. Ink composition of any one of the preceding claims, further comprising at least one polymerization inhibitor.

9. Printing method, comprising printing the ink composition of any one of the preceding claims on a recording medium.

10. Printing method of claim 9, wherein the ink composition is UV cured after printing on the recording medium.

11. Printing method of claim 9 or 10, wherein the printing method is carried out in air.

12. Printing method of any one of claims 9 to 11, wherein the printed image is fixed at a temperature below 70°C.

13. Method of preparing an ink composition, comprising mixing at least one network forming substance, an initiator, an amine acrylate and at least one oxygen scavenger selected from the group of a thiol compound having 1 to 8 carbon atoms and an amine compound, wherein the amine compound is a compound according to Formula I or Formula II,
NR₁R₂R₃ Formula I
(NR₁R₂R₄O)ₘM Formula II
wherein R₁, R₂ and R₃ are selected from a linear or branched C₁-C₈ alkyl group and a (CH₂)ₙOH group wherein n is an integer from 1-8, R₄ is selected from a (CH₂)ₒ group, wherein o is an integer from 1-8, m is an integer from 1-4, and M is a transition metal, and wherein the ink composition further comprises a gellant, preferably at least one wax, particularly a wax with a melting point of 45°C or higher.
